# EUROPÄISCHE PATENTSCHRIFT

(11) **EP 2 736 964 B1**
(45) Veröffentlichungstag und Bekanntmachung des Hinweises auf die Patenterteilung: **13.12.2017**
(21) Anmeldenummer: 12725451.4
(22) Anmeldetag: 05.06.2012
(51) Int. Cl.: C08J 3/24, C08J 3/28, C08J 5/00, C08F 2/60, B29C 67/00

(54) **POLYMERPULVER ZUR HERSTELLUNG DREIDIMENSIONALER OBJEKTE**
POLYMER POWDER FOR PRODUCING THREE-DIMENSIONAL OBJECTS
POUDRE DE POLYMÈRE DESTINÉE À FABRIQUER DES OBJETS TRIDIMENSIONNELS

(30) Priorität: 26.07.2011 DE 102011079812
(43) Veröffentlichungstag der Anmeldung: 04.06.2014
(73) Patentinhaber: Evonik Röhm GmbH, 64293 Darmstadt (DE)
(72) Erfinder: SCHMIDT, Friedrich Georg, 45721 Haltern am See (DE); HILF, Stefan, 63517 Rodenbach (DE); ZHOU, Jiawen, 47443 Moers (DE); GUIMARD, Nathalie, 66123 Saarbrücken (DE); BARNER-KOWOLLIK, Christopher, 76297 Stutensee (DE); ÖHLENSCHLÄGER, Kim Klaus, 68766 Hockenheim (DE)
(86) Internationale Anmeldenummer: PCT/EP2012/060539
(87) Internationale Veröffentlichungsnummer: WO 2013/013873

(56) Entgegenhaltungen:
- WO-A1-2011/101176
- US-A- 6 136 948
- US-B2- 6 933 361

## Beschreibung

### Gebiet der Erfindung

Die Erfindung betrifft die Verwendung eines Pulvers aus einem Polymer, welches aus zwei oder mehr Komponenten mit für Diels-Alder-Reaktionen geeigneten Funktionalitäten aufgebaut ist, bzw. eines Pulvergemisches (dry blend) aus Pulvern jeweils mindestens einer der reaktiven Komponenten, die zusammen die Diels-Alder-Reaktion miteinander eingehen und zu einer Retro-Diels-Alder-Reaktion fähig sind, in einem Rapid Prototyping Verfahren.

Weiterhin betrifft die Erfindung Formkörper, die unter Verwendung dieses Polymerpulvers durch ein schichtweise arbeitendes, formgebenden Verfahren, in welchem selektiv Bereiche einer Pulverschicht aufgeschmolzen werden, hergestellt wurden. Dabei kann nach Abkühlen und Verfestigen der zuvor Schicht für Schicht aufgeschmolzenen Bereiche der Formkörper dem Pulverbett entnommen werden.

### Stand der Technik

Die zügige Bereitstellung von Prototypen ist eine in der jüngsten Zeit häufig gestellte Aufgabe. Besonders geeignet sind Rapid Prototyping Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Ein Verfahren, welches besonders gut für den Zweck des Rapid Prototyping geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6 136 948 und WO 96/06881 beschrieben. Eine Vielzahl von thermoplastischen Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht. Weitere geeignete Verfahren sind solche, die mit einem Absorber arbeiten, der entweder im Pulver enthalten ist, oder der per Ink-Jet-Verfahren aufgetragen wird wie z.B. in DE 10 2004 012 682.8 beschrieben.

Für die genannten Rapid Prototyping- bzw. Rapid Manufacturing-Verfahren (RP- oder RM-Verfahren) können pulverförmige Substrate, insbesondere thermoplastische Polymere, vorzugsweise Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Polyamid, oder Gemische davon eingesetzt werden.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

In DE 10 2004 010 160 A1 wird die Verwendung von Polymerpulver mit Copolymer in formgebenden Verfahren beschrieben. Es handelt sich dabei um thermoplastische statistische Copolymere aus den unterschiedlichsten Monomerbausteinen, wobei der Schwerpunkt auf laurinlactam-basierenden Sytemen liegt. Für Copolyester werden beispielhaft Monomere genannt, ohne auf spezielle Zusammensetzungen einzugehen. Die Copolymere weisen einen MFR-Wert zwischen 1 und 10 g/10 min auf. US 6,933,361 B2 beschreibt Polymere auf Basis eines Dienophils und eines Diens, die mittels Diels-Alder-Reaktion thermisch reversibel vernetzbar sind. Laser-Sintering oder andere Verfahren zum Rapid Prototyping werden in US 6,933,361 B2 nicht genannt.

Nachteilig ist bei der Verarbeitung thermoplastischer Polymere, dass zur Vermeidung des sogenannten Curls die Temperatur in dem Bauraum bzw. Baukammer möglichst gleichmäßig auf einem Niveau knapp unterhalb des Schmelzpunktes des polymeren Werkstoffes gehalten werden muss. Bei amorphen Polymeren ist damit eine Temperatur knapp unterhalb der Glasübergangstemperatur gemeint, bei teilkristallinen Polymeren eine Temperatur knapp unterhalb des Kristallitschmelzpunktes. Mit Curl ist ein Verzug des bereits aufgeschmolzenen Bereiches gemeint, der ein zumindest teilweises Herausragen aus der Bauebene bewirkt. Es besteht damit die Gefahr, dass beim Auftrag der nächsten Pulverschicht, beispielsweise durch einen Rakel oder eine Walze, die herausragenden Bereiche verschoben oder sogar ganz herausgerissen werden. Das hat für den Prozess zur Folge, dass die Bauraumtemperatur insgesamt auf einem relativ hohen Niveau gehalten werden muss, und dass die durch Abkühlen und durch Kristallisation bedingte Volumenänderung der mit solchen Verfahren hergestellten Formkörpern erheblich ist. Nicht zuletzt wird durch den Abkühlprozess eine gerade für die "Rapid"- Verfahren nicht unerhebliche Zeitspanne benötigt.

Ein Nachteil insbesondere teilkristalliner Thermoplaste ist in vielen Fällen eine Änderung des Volumens während des Abkühlens. Es besteht zwar die Möglichkeit, durch eine sehr aufwendige und genaue Temperaturführung die Volumenänderung einer einzelnen Schicht weitgehend zu regulieren, jedoch ist die kristallisationsbedingte Volumenänderung beliebig aufgebauter dreidimensionaler Formkörper nicht gleichmäßig. Beispielsweise hängt die Ausbildung kristalliner Strukturen von der Abkühlgeschwindigkeit des Formkörpers ab, die an unterschiedlich dicken Stellen oder an verwinkelten Stellen anders ist als an anderen Stellen des Formkörpers.

Ein Nachteil insbesondere amorpher Thermoplaste ist die hohe Viskosität, die nur deutlich oberhalb des Schmelzpunktes bzw. der Glasübergangstemperatur ein Zusammenfließen ermöglicht. Häufig sind mit amorphen Thermoplasten nach obigen Verfahren hergestellte Formkörper daher relativ porös; es werden lediglich Sinterhälse ausgebildet, und die einzelnen Pulverpartikel sind im Formkörper noch erkennbar. Bei Erhöhung des Energieeintrages zur Viskositätsreduzierung kommt jedoch das Problem der Formtreue hinzu; beispielsweise durch Wärmeleitung von den aufzuschmelzenden in die umliegenden Bereiche werden die Konturen des Formkörpers unscharf.

Duroplastische oder elastomere Polymerpulver sind im Gegensatz zu thermoplastischen nicht zu verarbeiten. Während des Schmelzens vernetzende Systeme wiederum sind nicht bekannt. Solche Pulvermaterialien hätten insbesondere den Nachteil, dass die Vernetzung überwiegend innerhalb eines einzelnen Partikels und weniger zwischen den Partikeln stattfinden würde. Dies würde jedoch nicht nur zu einer verminderten Stabilität des Formkörpers führen, sondern auch die ohnehin schon vorhandene Tendenz der mittels Rapid Prototyping hergestellten Formkörper zu einer körnigen Oberfläche verstärken. Darüber hinaus wäre das vernetzte Material eines solchen Formkörpers nicht recyclebar.

Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in hetero Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt. Die partielle Rückreaktion bei noch höheren Temperaturen.

### Aufgabe

Aufgabe der vorliegenden Erfindung war es in Hinblick auf den Stand der Technik, ein Pulvermaterial für das Rapid Prototyping Verfahren, insbesondere für das Laser-Sinter-Verfahren, zur Verfügung zu stellen, welches zu Formkörpern mit sehr gutem, insbesondere glattem Oberflächenbild führt.

Darüber hinaus soll der mittels Rapid Prototyping hergestellte Formkörper über eine ausreichende Stabilität verfügen.

Weiterhin soll der Formkörper unter Wiedergewinnung des Pulvermaterials recyclebar sein. Insbesondere war eine Wiederverwendbarkeit des Materials, z.B. nach Vermahlung des Formkörpers, anzustreben.

Darüber hinaus soll die Verwendung des Pulvermaterials für die Herstellung von Formkörpern mittels Laser-Sinter-Verfahren eine niedrige Viskosität im aufgeschmolzenen Zustand aufweisen.

Weitere nicht explizit genannte Aufgaben können sich aus der Beschreibung, den Beispielen und den Ansprüchen der vorliegenden Erfindung ergeben.

### Lösung

Gelöst wurden die Aufgaben durch Zur Verfügung stellen eines neuartigen, zu einer Diels-Alder- bzw. Hetero-Diels-Alder-Reaktion, sowie nach Durchführung dieser Reaktion zu einer retro-Diels-Alder- bzw. retro- Hetero-Diels-Alder-Reaktion fähigen Pulvermaterials für Rapid-Prototyping-Verfahren, insbesondere für das selektive Laser-Sinter-Verfahren (SLS).

Durch das erfindungsgemäße Verfahren wird ein Formkörper, bestehend aus einer vernetzten Struktur innerhalb dieses Formkörpers hergestellt. Die Vernetzung erfolgt dabei auch über die ursprünglichen Pulverkorngrenzen hinweg.

Die Erfindung betrifft insbesondere ein Polymerpulver, das aus reversibel mit einander verknüpften Oligomeren bzw. Monomeren besteht, wobei die Verknüpfung bzw. Vernetzung der entstehenden Polymere über (Hetero-)Diels-Alder-Reaktionen bewirkt wird. Wird die Temperatur durch Einbringen elektromagnetischer Energie über die für eine Retro-(Hetero-) Diels-Alder-Reaktion benötigte Grenze gebracht, werden die ursprünglich vernetzten Pulver wieder in die einzelnen Komponenten zerlegt, werden fließfähig und bilden neue Vernetzungsstellen beim Erkalten. Damit wird eine gute Vernetzung auch über die ehemaligen Pulverkorngrenzen hinaus erreicht und ein gewünschter Formkörper gebildet.

Im Detail wurden die Aufgaben mit einem neuartigen Laser-Sinter-Verfahren gelöst. Bei diesem Verfahren wird ein vernetztes Pulvermaterial verwendet. Dieses Pulvermaterial weist eine Komponente A mit mindestens zwei dienophilen Doppelbindungen und eine Komponente B mit mindestens zwei zu (Hetero)Diels-Alder-Reaktionen befähigten Dien-Funktionalitäten auf. Dabei hat zumindest eine dieser beiden Komponenten A oder B mehr als zwei der der jeweiligen Funktionalität. Dieses Pulvermaterial wird in einem ersten Verfahrensschritt mittels einer Diels-Alder- oder einer Hetero-Diels-Alder-Reaktion bei einer Temperatur 1, bei der es sich bevorzugt um Raumtemperatur handelt, vernetzt. In einem zweiten Verfahrensschritt wird das vernetzte Pulvermaterial in Form eines Pulverbettes bereitgestellt und anschließend wird in einem dritten Verfahrensschritt die Vernetzung dieses Pulvermaterial selektiv bei einer gegenüber Temperatur 1 höheren Temperatur 2 zu mindestens 50% wieder gelöst. Insbesondere wird das Pulvermaterial nach Einbringen der Temperatur fließfähig, bevorzugt flüssig. In einem vierten Verfahrensschritt wird das Pulvermaterial nach Einbringen der Temperatur 2 wieder abgekühlt. Bevorzugt wird dabei auf Raumtemperatur gekühlt. Dabei erstarrt das zuvor fließfähige Pulvermaterial zu einem Formkörper. In einem fünften Verfahrensschritt wird dieser Formkörper entnommen und gereinigt. Das Reinigen kann mittels Pressluft, Wasser oder einem Lösungsmittel erfolgen.

In einer alternativen, bevorzugten Ausführungsform der vorliegenden Erfindung kann der Formkörper durch Vermahlen wieder zu dem Pulvermaterial verarbeitet werden. Das dabei neugewonnene Pulvermaterial ist dann in dem zuvor geschilderten Verfahren wieder verwendbar.

Die Temperatur 2 in Verfahrensschritt 3 kann auf verschiedene Art und Weise selektiv in das vorgelegte Pulvermaterial eingebracht werden. Wichtig dabei ist, dass die Temperaturerhöhung auf eng begrenzte Bereiche des Pulvermaterials anwendbar ist. In einer Ausführungsform erfolgt die Temperaturerhöhung mittels elektromagnetischer Strahlung. In einer besonderen Ausführungsform wird die Energie zur Temperaturerhöhung in Form von Laserstrahlung eingebracht.

In einer weiteren Variante des Verfahrens wird das Pulverbett während des Verfahrens, insbesondere nach dem Vorlegen als Pulverbett und vor Verfahrensschritt drei, auf eine Temperatur 3, die zwischen Temperatur 1 und Temperatur 2 liegt, temperiert. Auf diese Weise wird zum einen eine schnellere und selektivere Fließfähigkeit in Verfahrensschritt 3 gewährleistet. Zum anderen werden Formkörper mit einer glätteren und optisch besseren Oberflächenstruktur erhalten. Bevorzugt liegt diese Temperatur 3 zwischen 5 und 20 °C unterhalb der Temperatur bei der das Pulvermaterial fließfähig wird.

Temperatur 3 kann darüber hinaus auch nach dem Abkühlen von Temperatur 2 eine Bedeutung haben. Abhängig von dem Dien-Dienophil-Paar muss das Pulverbett nach Verfahrensschritt 3 beheizt sein, damit die Diels-Alder-Reaktion nach dem Aufschmelzen wieder in akzeptabler Zeit erfolgen kann und die Vernetzungsstellen wieder verknüpft werden. So sollte z.B. für das Furan / Bismaleiimde-Reaktionspaar das Pulver-Bett bei ca. 100 °C gehalten werden. Für das Pyridyldithioester / Cyclopentadien-Reaktionspaar sind keine erhöhten Temperaturen nötig.

Temperatur 2 liegt bevorzugt mindestens 5 °C, bevorzugt mindestens 10 °C und besonders bevorzugt mindestens 25 °C oberhalb der Temperatur, bei der eine Fließfähigkeit erhalten wird. In der Regel liegt Temperatur 2 mindestens 5 °C unterhalb der Zersetzungstemperatur der Komponenten des verwendeten Pulvermaterials. Temperatur 1 ist eine Temperatur, bei der die Diels-Alder-Reaktion zwischen den Komponenten A und B erfolgt, ohne dass die Rückreaktion in einem relevanten Ausmaß stattfindet. Temperatur 1 kann zwischen 0 und 80 °C liegen, bevorzugt ist Temperatur 1 Raumtemperatur.

Bei der Verflüssigung bzw. Erreichung der Fließfähigkeit des Pulvermaterials spielt nicht nur die retro-(Hetero-)Diels-Alder-Temperatur eine Rolle, sondern im Falle der Verwendung von Polymeren auch die Erweichungstemperaturen dieser, also die Schmelz- oder Glasübergangstemperaturen der verwendeten Polymere, eine Rolle. Die Temperatur 2 liegt zwingend oberhalb der Erweichungstemperatur mindestens einer, bevorzugt mindestens zweier, am besten aller verwendeten polymeren Komponenten.

Das erfindungsgemäße Pulvermaterial wird bevorzugt durch Zusammenschmelzen sämtlicher Komponenten, wobei die (Hetero-)Diels-Alder-Reaktion stattfindet, anschließendem Abkühlen und Mahlen, Sprühtrocknen oder Zerstäuben hergestellt. Beim Zerstäuben wird dabei die noch warme Reaktionsmischung eingesetzt und während des Zerstäubens gekühlt.

Das erfindungsgemäß verwendete Pulvermaterial setzt sich grundsätzlich aus zwei Komponenten, bei denen es sich jeweils um ein oder mehrere zwei- oder mehrfunktionelle Oligomere bzw. Monomere handeln kann, zusammen. Die erste Komponente A weist für Diels-Alder-Reaktionen geeigneten Dien-Strukturen, die zweite Komponente B entsprechende Dienophil-Strukturen auf.

Komponente A und Komponente B unterscheiden sich in ihrem Funktionalitätsverhältnis in dem Pulvermaterial maximal um 40%, bevorzugt maximal um 20% und besonders bevorzugt maximal um 10%. Ganz besonders bevorzugt liegen die beiden Komponenten in einem Verhältnis von 1:1 vor.

Insbesondere bevorzugt handelt es sich bei mindestens einer der Komponenten A oder B um ein Polymer. Bevorzugt handelt es sich bei A und B jeweils um ein Polymer. In einer alternativen Ausführungsform weist ein einzelnes Polymer beide Funktionen auf. In diesem Fall handelt es sich also bei A und B um die gleiche polymere Verbindung. In einer anderen alternativen, bevorzugten Ausführungsform verteilen sich die die beiden unterschiedlichen Funktionen - Dien und Dienophil - auf zwei voneinander getrennte Komponenten A und B.

Für den Fall, dass es sich bei beiden Komponenten A und B jeweils um ein Polymer handelt, kann es sich bei diesen Polymeren um identische oder verschiedene Polymere handeln. Im falle identischer Polymere sind diese nur durch die Funktionalität Dien bzw. Dienophil unterscheidbar, nicht jedoch durch die übrige Zusammensetzung der Polymere. Dabei können sich Molekulargewichte, Polydispersitäten und Partikelgrößen durchaus voneinander unterscheiden. Bevorzugt sind diese Unterschiede jedoch gering zu halten.

Bei den verwendbaren Polymeren, die jeweils als Dien und/oder Dienophil funktionalisiert sind, kann es sich um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handeln.

Bevorzugt zeichnet sich das erfindungsgemäße Verfahren dadurch aus, dass die Komponenten A und B mindestens 50 Gew%, bevorzugt mindestens 70 Gew% des gesamten Pulvermaterials ausmachen.

In einer sehr speziellen Ausführungsform des erfindungsgemäßen Verfahrens enthält das Pulvermaterial mindestens 50 Gew% einer anorganischen Komponente, insbesondere eines Metallpulvers. In dieser Ausführungsform dienen die Komponenten A und B dazu, dieses Metallpulver in einer geschlossenen Matrix einzubetten, bzw. das Metallpulver zu verkleben. Auf diese Weise wird ein besonders stabiler und metallisch wirkender Formkörper gewonnen. Eine solche Variante ist insbesondere interessant bei der Prototypenherstellung.

In einer besonders bevorzugten Ausführungsform der Erfindung liegt das Pulvermaterial als ein Gemisch mindestens zweier verschiedener Pulver vor. Dabei handelt es sich bei mindestens einem Pulver um die Komponente A und mindestens bei einem anderen Pulver um die Komponente B. Ein solches System wird auch als "Dryblend" bezeichnet. Einen solchen Dryblend kann man einfach durch Mischen der beiden Komponenten erhalten.

Bevorzugt weist ein solcher Dryblend ein Funktionalitätverhältnis der Komponente A zu Komponete B von ungefähr 1:1 auf. Ungefähr bedeutet in diesem Zusammenhang, dass die in geringerer Anzahl vorliegende Komponente in ihrer Stoffmenge der Funktionalität maximal 20%, bevorzugt maximal 10% und besonders bevorzugt maximal 5% von der in größerer Zahl vorliegenden Komponente abweicht.

Die Erweichungstemperaturen der einzelnen Komponenten in einem Dryblend liegen bevorzugt nicht weiter als 30°C, bevorzugt nicht mehr als 20°C und besonders bevorzugt nicht mehr als 10°C auseinander. So wird ein gleichmäßiges und simultanes Aufschmelzen gewährleisten.

Bei Komponente A handelt es sich um eine Verbindung, bevorzugt um ein Polymer, mit mindestens zwei dienophilen Gruppen. Allgemein weist die Verbindung A folgende Form auf:

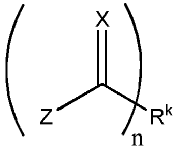

Bei Z handelt es sich um eine Elektronen-ziehende Gruppe, bei R^{k} um eine mehrbindige organische Gruppe oder um ein Polymer und bei n um eine Zahl zwischen 2 und 20. Bei X kann es sich um Sauerstoff, Schwefel, einen NH- oder einen CH₂-Rest handeln, bevorzugt handelt es sich um Schwefel oder einen CH₂-Rest. Im Falle eines CH₂-Restes wird eine "normale" Diels-Alder-Reaktion durchgeführt. Bei Auswahl der Gruppe und des dazugehörigen Diens ist nur wichtig, dass die Diels-Alder-Reaktion bei einer Temperatur unterhalb von 80°C aktivierbar, bei einer höheren Reaktion mittels einer retro-Diels-Alder-Reaktion wieder rückführbar ist, und dass diese höhere Temperatur möglichst unterhalb der Zersetzungstemperatur der im Pulvermaterial enthaltenen Komponenten liegt.

Im Falle, dass es sich bei Z um ein Schwefelatom handelt, werden entsprechend Hetero-Diels-Alder- und retro-Hetero-Diels-Alder-Reaktionen durchgeführt. Für diese gelten die gleichen Bedingungen wie zuvor für die Diels-Alder-komponenten ausgeführt wurde.

Für diesen Fall also, dass es sich bei dem Dienophil um eine Verbindung mit einer Kohlenstoff-Schwefel-Doppelbindung handelt, hat Komponente A folgende Struktur:

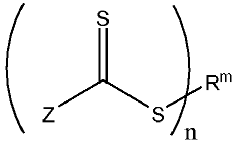

Dabei ist Z eine Elektronen-ziehende Gruppe, R^{m} ist eine mehrbindige organische Gruppe oder ein Polymer und n ist eine Zahl zwischen 2 und 20. Besonders bevorzugt handelt es sich bei dem Dienophil in diesem Fall um einen Dithioester oder um ein Trithiocarbonat.

In einer bevorzugten Ausführungsform ist die Gruppe Z eine 2-Pyridylgruppe., eine Phosphorylgruppe oder eine Sulfphonylgruppe. Desweiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt.

Eine genaue Beschreibung der Dienophilgruppen für diese Ausführungsform einer (retro-)Hetero-Diels-Alder-Reaktion findet sich in der deutschen Patentanmeldung 102010002987.9 (bzw. der internationalen Patentanmeldung PCT/EP2011/050043). In dieser Schrift wird anhand von Ausführungsbeispielen auch die Durchführbarkeit der Reaktion gezeigt.

Bei Komponente B handelt es sich um ein Dien. Dieses Dien hat die allgemeine Formel:

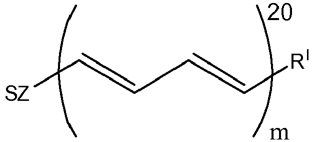

Dabei ist SZ eine eher Elektronen-schiebende Gruppe, wobei es sich auch einfach um Wasserstoff oder einen einfachen Alkylrest handeln kann. R^{I} ist eine mehrbindige organische Gruppe oder ein Polymer und n ist eine Zahl zwischen 2 und 20. Die Kohlenstoffatome der Doppelbindungen können darüber hinaus weitere Reste aufweisen.

Bekannte Gruppen, die besonders gut als Dien geeignet sind, sind z.B. Furfuryl-Reste, Adukte des Sorbinalkohols oder Cyclopentadienyl-Reste.

Weist das Pulvermaterial in Form einer Pulvermischung eine Mischung von Dien-Funktionalität-enthaltenden Partikeln und Dienophil-Funktionalität-enthaltenden Partikeln auf, so weisen z.B. die Dien-Funktionalität-enthaltenden Partikel vorzugsweise eine mittlere Partikelgröße von 10 bis 250 µm, vorzugsweise von 40 bis 100 µm und besonders bevorzugt von 45 bis 80 µm auf. Die Dienophil-Funktionalität-enthaltenden Partikeln weisen dann vorzugsweise eine Partikelgröße auf, die die mittlere Korngröße d₅₀ der Dien-Funktionalität-enthaltenden Partikel bzw. -pulver um nicht mehr als 20 %, vorzugsweise um nicht mehr als 15 % und ganz besonders bevorzugt um nicht mehr als 5 % über- bzw. unterschreiten.

Die Verhältnisse sind auch umgekehrt einstellbar: die Dienophil-Funktionalität-enthaltenden Partikel weisen z.B. vorzugsweise eine mittlere Partikelgröße von 10 bis 250 µm, vorzugsweise von 40 bis 100 µm und besonders bevorzugt von 45 bis 80 µm auf. Dann weisen die Dien-Funktionalität-enthaltenden Partikeln vorzugsweise eine Partikelgröße auf, die die mittlere Korngröße d₅₀ der Dienophil-Funktionalität-enthaltenden Partikel bzw. -pulver um nicht mehr als 20 %, vorzugsweise um nicht mehr als 15 % und ganz besonders bevorzugt um nicht mehr als 5 % über- bzw. unterschreiten. Die Korngröße ist insbesondere limitiert durch die zulässige Bauhöhe bzw. Schichtdicke in der Laser-Sinter-Apparatur.

Weist das Pulvermaterial eine einzelne Art Partikel auf, die zunächst aus den die Dien-Funktionalität-enthaltenden niedermolekularen oder oligomeren/polymeren Bausteine und die Dienophil-Funktionalität-enthaltenden niedermolekularen oder oligomeren/polymeren Bausteine hergestellt wurden, kann eine Siebung oder Sichtung erfolgen, sodass die mittlere Korngröße d₅₀ der Partikel vorzugsweise von 10 bis 250 µm, vorzugsweise von 40 bis 100 µm und besonders bevorzugt von 45 bis 80 µm beträgt. Diese eine Art Partikel kann, nachdem die Diels-Alder-Reaktion stattgefunden hat, durch Mahlen, Sprühtrocknen oder durch unter Kühlung Zerstäuben des direkt aus der Diels-Alder-Reaktion bei erhöhter Temperatur gewonnen Produktes gewonnen werden.

Das Erfindungsgemäße Pulvermaterial kann Rieselhilfen oder auch weitere Hilfsstoffe und/oder Füllstoffe und/oder Pigmente aufweisen. Solche Hilfsstoffe können z. B. pyrogenes Siliziumdioxid oder auch gefällte Kieselsäuren sein. Pyrogenes Siliziumdioxid (pyrogene Kieselsäuren) wird zum Beispiel unter dem Produktnamen Aerosil®, mit unterschiedlichen Spezifikationen, durch die Evonik Degussa AG angeboten. Vorzugsweise weist erfindungsgemäßes Pulvermaterial weniger als 3 Gew%, vorzugsweise von 0,001 bis 2 Gew% und ganz besonders bevorzugt von 0,05 bis 1 Gew% solcher Hilfsstoffe bezogen auf die Summe der vorhandenen Polymere, also der Summe aus der Dien-Funktionalität-enthaltenden Komponente und der Dienophil-Funktionalität-enthaltenden Komponente auf. Die Füllstoffe können z. B. Glas-, Aluminium-, Metall- oder Keramikpartikel, wie z. B. massive oder hohle Glaskugeln, Stahlkugeln oder Metallgrieß oder auch Buntpigmente, wie z. B. Übergangsmetalloxide sein.

Die Füllstoffpartikel weisen dabei vorzugsweise eine kleinere oder ungefähr gleich große mittlere Korngröße wie die Partikel der Polymere, also der Summe aus der Dien-Funktionalität-enthaltenden Komponente und der Dienophil-Funktionalität-enthaltenden Komponente auf. Vorzugsweise sollte die mittlere Korngröße d₅₀ der Füllstoffe die mittlere Korngröße d₅₀ der Polymerpartikel, also Partikel aus der Dien-Funktionalität-enthaltenden Komponente und der Dienophil-Funktionalität-enthaltenden Komponente um nicht mehr als 20 %, vorzugsweise um nicht mehr als 15 % und ganz besonders bevorzugt um nicht mehr als 5 % überschreiten. Gleiches gilt entsprechend für die Partikelgrößenverhältnisse beim Einsatz eines Dryblends aus den Einzelkomponenten. Die Partikelgröße ist insbesondere limitiert durch die zulässige Bauhöhe bzw. Schichtdicke in der Laser-Sinter-Apparatur.

Vorzugsweise weist erfindungsgemäßes Pulvermaterial, bzw. Sinterpulver weniger als 70 Gew%, bevorzugt von 0,001 bis 60 Gew%, besonders bevorzugt von 0,05 bis 50 Gew% und ganz besonders bevorzugt von 0,5 bis 25 Gew% Füllstoffe bezogen auf die Summe der vorhandenen Polymere auf, so dass der Volumenanteil der Polymere in jedem Fall größer 50 Vol% beträgt.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Sinterpulver hergestellt wurden. Die Überschreitung kann außerdem zu einer Störung der Eigenabsorption des Laserlichts durch das Sinterpulver führen, so dass ein solches Pulver für das selektive Lasersintern nicht mehr einsetzbar ist.

Gleichzeitig ist ein nach dem verfahren erhältlicher Formkörper, bestehend aus einem vernetzten Material, Bestandteil der vorliegenden Erfindung. Dieser Formkörper ist dadurch gekennzeichnet, dass er aus einem Polymerpulver mittels einem Laser-Sinter-Verfahren gebildet wurde, und dass das Pulvermaterial während des Aufschmelzen eine Komponente A mit mindestens zwei dienophilen Doppelbindungen und eine Komponente B mit mindestens zwei Dien-Funktionalitäten, wobei zumindest eine dieser beiden Komponenten A oder B mehr als zwei der jeweils genannten Funktionalitäten aufweist, enthalten hat.

Die Formkörper können in weiteren Prozessschritten nachbearbeitet, zum Beispiel eingefärbt oder bedruckt werden. Sie finden beispielsweise Anwendung als Prototypen, (Architektur-) Modelle, Werkzeuge, Werbegeschenke, Rohlinge zur Herstellung von Gussformen, in der Kleinproduktion, z.B. für den Automobilbau oder als Demonstratoren.

### Beispiel

### Vorstufe 1

a) Zu 53 Äquivalenten, in einem 1L-Dreihalkskolben mit Magnetrührer, Stickstoffzuleitung und Rückflusskühler vorgelegter Monomermischung, bestehend aus 49 Gewichtsteilen Methylmethacrylat, 86 Gewichtsteilen n-Butylacrylat und 15 Gewichtsteilen Furfurylmethacrylat, werden 1 Äquivalent 1,4-Bis(bromoisobutyryloxy)butan, 0,35 Äquivalente Kupfer(I)oxid und 0,75 Äquivalente Pentamethyldiethylentriamin zugegeben. Es wird soviel Aceton zu der Mischung hinzugefügt, dass 500 mL einer 50 Vol%igen Lösung vorliegen. Vorhandener Sauerstoff wird durch 40 minütiges Durchleiten von Stickstoff entfernt. Die Mischung wird darauf unter Stickstoff in einem Ölbad auf 60 °C erhitzt. Nach 3 h Polymerisation wird diese durch Abkühlen auf Raumtemperatur und Zuleiten von Luftsauerstoff abgebrochen. Der Kupferkatalysator wird durch elektrochemische Abscheidung auf Zinkstaub entsprechend dem Verfahren, wie es in WO 2012(007213 beschrieben ist, entfernt. Das Furfuryl-gruppen tragende Polymer wird durch Verdampfen des Lösemittels gewonnen. Das Molekulargewicht wird mittels GPC mit Kalibration gegen PMMA-Standarts in THF bestimmt: *M*ₙ = 11000 g·mol⁻¹, *PDI* = 1.5

### Beispiel 1:

60 Gewichtsteile der Vorstufe 1 werden mit m-Xylylen-bismaleinimid (1,0 Äquivalente zu Furfuryl-Gruppen), 6 Gewichtsteilen Tetrahydrofuran und einem Gewichtsteil ZnCl₂ versetzt und für 2 Stunden bei 50°C gerührt. Danach wird die Probe in eine Aluminiumschale gegossen und im Vakuumschrank bei 50°C getrocknet (über Nacht). Der erhaltene Feststoff wird anschließend auf die gewünschte Korngröße vermalen und optional gesiebt.

Dieses Pulver kann gemäß Beschreibung in einer Lasersinter-3D-Druckmaschine verwendet werden.

## Patentansprüche

1. Laser-Sinter-Verfahren, **dadurch gekennzeichnet, dass** in dem Verfahren ein vernetztes Pulvermaterial verwendet wird, wobei das Pulvermaterial eine Komponente A mit mindestens zwei dienophilen Doppelbindungen und eine Komponente B mit mindestens zwei Dien-Funktionalitäten enthält, wobei zumindest eine dieser beiden Komponenten A oder B mehr als zwei der jeweiligen Funktionalität aufweist, **dadurch gekennzeichnet, dass** dieses Pulvermaterial mittels einer Diels-Alder- oder einer Hetero-Diels-Alder-Reaktion bei einer Temperatur 1 vernetzt wird, in Form eines Pulverbettes bereitgestellt wird und anschließend die Vernetzung dieses Pulvermaterial selektiv bei einer gegenüber Temperatur 1 höheren Temperatur 2 zu mindestens 50% wieder gelöst wird.

2. Verfahren gemäß Anspruch 1, **dadurch gekennzeichnet, dass** es sich bei Temperatur 1 um Raumtemperatur handelt, und dass das Pulvermaterial nach Einbringen der Temperatur 2 fließfähig ist.

3. Verfahren gemäß Anspruch 2, **dadurch gekennzeichnet, dass** das Pulvermaterial nach Einbringen der Temperatur 2 wieder erkaltet und dabei zu einem Formkörper erstarrt.

4. Verfahren gemäß Anspruch 1, **dadurch gekennzeichnet, dass** mindestens eine der Komponenten A oder B als Polymer vorliegt.

5. Verfahren gemäß Anspruch 4, **dadurch gekennzeichnet, dass** es sich bei den Komponenten A und B jeweils um ein Polymer handelt, und dass es sich bei diesen Polymeren um gleiche oder verschiedene Polymere handeln kann.

6. Verfahren gemäß Anspruch 5, **dadurch gekennzeichnet, dass** es sich bei dem Pulvermaterial um ein Gemisch mindestens zweier verschiedener Pulver handelt, und dass mindestens ein Pulver die Komponente A und mindestens ein anderes Pulver die Komponente B darstellt.

7. Verfahren gemäß Anspruch 4, **dadurch gekennzeichnet, dass** es sich bei dem Polymer um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

8. Verfahren gemäß Anspruch 1, **dadurch gekennzeichnet, dass** die Komponenten A und B mindestens 50 Gew% des Pulvermaterials ausmachen.

9. Verfahren gemäß Anspruch 1, **dadurch gekennzeichnet, dass** das Pulvermaterial zu mindestens 50 Gew% eine anorganische Komponente enthält.

10. Verfahren gemäß Anspruch 1, **dadurch gekennzeichnet, dass** die Temperatur 2 mittels elektromagnetischer Strahlung eingebracht wird.

11. Verfahren gemäß Anspruch 10, **dadurch gekennzeichnet, dass** die elektromagnetische Strahlung in Form von Laserstrahlung eingebracht wird.

12. Verfahren gemäß Anspruch 3, **dadurch gekennzeichnet, dass** der Formkörper durch Vermahlen wieder zu dem Pulvermaterial verarbeitet wird und dieses neugewonnene Pulvermaterial in einem Verfahren gemäß Anspruch 1 wieder verwendbar ist.

13. Verfahren gemäß Anspruch 1, **dadurch gekennzeichnet, dass** das Pulverbett während des Verfahrens auf eine Temperatur 3, die zwischen Temperatur 1 und Temperatur 2 liegt, temperiert wird.

14. Verfahren gemäß Anspruch 1, **dadurch gekennzeichnet, dass** es sich bei dem Dienophil um eine Verbindung mit einer Kohlenstoff-Schwefel-Doppelbindung handelt.

15. Verfahren gemäß Anspruch 14, **dadurch gekennzeichnet, dass** es sich bei Komponente A um eine Verbindung mit der Struktur 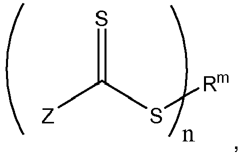 wobei es sich bei Z um eine Elektronen-ziehende Gruppe, bei R^{m} um eine mehrbindige organische Gruppe oder um ein Polymer und bei n um eine Zahl zwischen 2 und 20 handelt.

16. Formkörper bestehend aus einem vernetzten Material, **dadurch gekennzeichnet, dass** der Formkörper aus einem Polymerpulver mittels einem Laser-Sinter-Verfahren gebildet wurde, und dass das Pulvermaterial während des Aufschmelzen eine Komponente A mit mindestens zwei dienophilen Doppelbindungen und eine Komponente B mit mindestens zwei Dien-Funktionalitäten, wobei zumindest eine dieser beiden Komponenten A oder B mehr als zwei der jeweils genannten Funktionalitäten aufweist, enthalten hat.

## Claims

1. Laser-sintering process, **characterized in that** the process uses a crosslinked powder material, where the powder material comprises a component A with at least two dienophilic double bonds and a component B with at least two diene functionalities, where at least one of these two components A or B has more than two of the respective functionality, **characterized in that** this powder material is crosslinked by means of a Diels-Alder reaction or of a hetero-Diels-Alder reaction at a temperature 1, and is provided in the form of a powder bed, and then the crosslinking of said powder material is selectively reversed to an extent of at least 50% at a temperature 2 that is higher than temperature 1.

2. Process according to Claim 1, **characterized in that** temperature 1 is room temperature, and that the powder material is flowable after introduction of the temperature 2.

3. Process according to Claim 2, **characterized in that** after introduction of the temperature 2 the powder material is in turn cooled and thus solidified to give a molding.

4. Process according to Claim 1, **characterized in that** at least one of the components A or B takes the form of polymer.

5. Process according to Claim 4, **characterized in that** each of the components A and B is a polymer, and that these polymers can be identical or different polymers.

6. Process according to Claim 5, **characterized in that** the powder material is a mixture of at least two different powders, and that at least one powder represents component A and at least one other powder represents component B.

7. Process according to Claim 4, **characterized in that** the polymer is polyacrylate, polymethacrylate, polystyrene, copolymer of acrylates, of methacrylates, and/or of styrenes, polyacrylonitrile, polyether, polyester, polylactic acid, polyamide, polyesteramide, polyurethane, polycarbonate, amorphous or semicrystalline poly-α-olefin, EPDM, EPM, hydrogenated or non-hydrogenated polybutadiene, ABS, SBR, polysiloxane, and/or block, comb, and/or star copolymers of these polymers.

8. Process according to Claim 1, **characterized in that** the components A and B make up at least 50% by weight of the powder material.

9. Process according to Claim 1, **characterized in that** the powder material comprises at least 50% by weight of an inorganic component.

10. Process according to Claim 1, **characterized in that** the temperature 2 is introduced by means of electromagnetic radiation.

11. Process according to Claim 10, **characterized in that** the electromagnetic radiation is introduced in the form of laser radiation.

12. Process according to Claim 3, **characterized in**
**that** the molding is in turn processed via grinding to give the powder material, and this recycled powder material can in turn be used in a process according to Claim 1.

13. Process according to Claim 1, **characterized in that** the temperature of the powder bed is controlled during the process to a temperature 3 which is between temperature 1 and temperature 2.

14. Process according to Claim 1, **characterized in that** the dienophil is a compound with a carbon-sulfur double bond.

15. Process according to Claim 14, **characterized in that** component A is a compound with the following structure 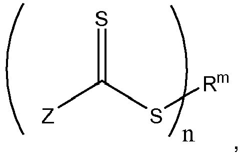 where Z is an electron-withdrawing group, R^{m} is a polyvalent organic group or is a polymer, and n is a number from 2 to 20.

16. Molding composed of a crosslinked material, **characterized in that** the molding has been formed by means of a laser-sintering process from a polymer powder, and that the powder material comprised, at the time of melting, a component A with at least two dienophilic double bonds and a component B with at least two diene functionalities, where at least one of these two components A or B has more than two of the respective functionalities mentioned.

## Revendications

1. Procédé de frittage au laser, **caractérisé en ce qu'**on utilise, dans le procédé, un matériau poudreux réticulé, le matériau poudreux contenant un composant A présentant au moins deux doubles liaisons diénophiles et un composant B présentant au moins deux fonctionnalités de type diène, au moins un de ces deux composants A ou B présentant plus de deux de la fonctionnalité respective, **caractérisé en ce que** ce matériau poudreux est réticulé au moyen d'une réaction Diels-Alder ou d'une réaction hétéro-Diels-Alder à une température 1, est mis à disposition sous forme d'un lit de poudre et la réticulation de ce matériau poudreux est ensuite de nouveau défaite sélectivement à raison d'au moins 50% à une température 2 supérieure par rapport à la température 1.

2. Procédé selon la revendication 1, **caractérisé en ce qu'**il s'agit, pour la température 1, de la température ambiante et **en ce que** le matériau poudreux est apte à s'écouler après l'introduction de la température 2.

3. Procédé selon la revendication 2, **caractérisé en ce que** le matériau poudreux, après l'introduction de la température 2, refroidit de nouveau et se rigidifie en un corps façonné.

4. Procédé selon la revendication 1, **caractérisé en ce qu'**au moins un des composants A ou B se trouve sous forme de polymère.

5. Procédé selon la revendication 4, **caractérisé en ce qu'**il s'agit, pour les composants A et B, à chaque fois d'un polymère et **en ce qu'**il peut s'agir de polymères identiques ou différents pour ces polymères.

6. Procédé selon la revendication 5, **caractérisé en ce qu'**il s'agit, pour le matériau poudreux, d'un mélange d'au moins deux poudres différentes et **en ce qu'**au moins une poudre représente le composant A et au moins une autre poudre représente le composant B.

7. Procédé selon la revendication 4, **caractérisé en ce qu'**il s'agit, pour le polymère, de polyacrylates, de polyméthacrylates, de polystyrènes, de copolymères d'acrylates, de méthacrylates et/ou de styrènes, de polyacrylonitrile, de polyéthers, de polyesters, de poly(acides lactiques), de polyamides, de polyesteramides, de polyuréthanes, de polycarbonates, de poly-α-oléfines amorphes ou partiellement cristallines, d'EPDM, d'EPM, de polybutadiènes hydrogénés ou non hydrogénés, d'ABS, de SBR, de polysiloxanes et/ou de copolymères séquencés, en peigne et/ou en étoile de ces polymères.

8. Procédé selon la revendication 1, **caractérisé en ce que** les composants A et B représentent au moins 50% en poids du matériau poudreux.

9. Procédé selon la revendication 1, **caractérisé en ce que** le matériau poudreux contient un composant inorganique à raison d'au moins 50% en poids.

10. Procédé selon la revendication 1, **caractérisé en ce que** la température 2 est introduite au moyen d'un rayonnement électromagnétique.

11. Procédé selon la revendication 10, **caractérisé en ce que** le rayonnement électromagnétique est introduit sous forme de rayonnement laser.

12. Procédé selon la revendication 3, **caractérisé en ce que** le corps façonné est de nouveau transformé par broyage en matériau poudreux et ce matériau poudreux nouvellement obtenu est de nouveau utilisable dans un procédé selon la revendication 1.

13. Procédé selon la revendication 1, **caractérisé en ce que** le lit de poudre est régulé thermiquement pendant le procédé à une température 3, qui se situe entre la température 1 et la température 2.

14. Procédé selon la revendication 1, **caractérisé en ce qu'**il s'agit, pour le diénophile, d'un composé présentant une double liaison carbone-soufre.

15. Procédé selon la revendication 14, **caractérisé en ce qu'**il s'agit, pour le composant A, d'un composé présentant la structure 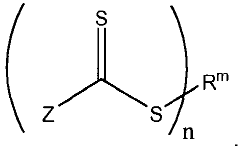 où il s'agit, pour Z, d'un groupe attracteur d'électrons, pour R^{m} d'un groupe organique polyvalent ou d'un polymère pour n d'un nombre entre 2 et 20.

16. Corps façonné constitué par un matériau réticulé, **caractérisé en ce que** le corps façonné a été formé à partir d'une poudre polymère au moyen d'un procédé de frittage au laser et **en ce que** le matériau poudreux a contenu, pendant la fusion, un composant A présentant au moins deux doubles liaisons diénophiles et un composant B présentant au moins deux fonctionnalités de type diène, au moins un de ces deux composants A ou B présentant plus de deux des fonctionnalités respectives mentionnées.
